# EUROPÄISCHE PATENTANMELDUNG

(11) **EP 4 272 531 A1**
(43) Veröffentlichungstag der Anmeldung: **08.11.2023**
(21) Anmeldenummer: 23162814.0
(22) Anmeldetag: 20.03.2023
(51) Int. Cl.: A01B 69/04, G05D 1/02

(54) **SELBSTFAHRENDE LANDWIRTSCHAFTLICHE ARBEITSMASCHINE**

(30) Priorität: 04.05.2022 DE 102022110967
(71) Anmelder: CLAAS E-Systems GmbH, 49201 Dissen (DE)
(72) Erfinder: Lücke, Andreas, 33184 Altenbeken (DE); Redenius, Jannik, 32361 Pr. Oldendorf (DE); Bone, Sven, 49124 Georgsmarienhütte (DE); Töniges, Torben, 33602 Bielefeld (DE); Skiba, Andreas, 33647 Bielefeld (DE)
(74) Vertreter: CLAAS Gruppe

(57) **Zusammenfassung**

Die vorliegende Erfindung betrifft eine selbstfahrende landwirtschaftliche Arbeitsmaschine (1) zur Bearbeitung eines landwirtschaftlichen Feldes (2).

Die vorliegende Erfindung beruht auf dem allgemeinen Gedanken, dass eine Steuervorrichtung (3) der selbstfahrenden landwirtschaftlichen Arbeitsmaschine (1) dazu ausgebildet und/oder programmiert ist, die Route (4) entlang des landwirtschaftlichen Feldes (2) basierend auf Wetterdaten bezüglich des zu bearbeitenden Feldes (2) und basierend auf topografischen Kartenfelddaten bezüglich des zu bearbeitenden Feldes (2) anzupassen.

## Beschreibung

Die vorliegende Erfindung betrifft eine selbstfahrende landwirtschaftliche Arbeitsmaschine zur Bearbeitung eines landwirtschaftlichen Feldes.

Solche selbstfahrenden landwirtschaftlichen Arbeitsmaschinen weisen typischerweise eine Steuervorrichtung auf, die dazu ausgebildet und/oder programmiert ist, die selbstfahrende landwirtschaftliche Arbeitsmaschine während der Bearbeitung des landwirtschaftlichen Feldes entlang einer Route zu führen. Insbesondere sind solche Steuervorrichtungen derart ausgebildet und/oder programmiert, dass die selbstfahrende landwirtschaftliche Arbeitsmaschine die Route autonom abfährt, wobei jedoch stets ein Benutzer in der selbstfahrenden landwirtschaftlichen Arbeitsmaschine während der Bearbeitung des landwirtschaftlichen Feldes anwesend sein muss, um bei ungewünschten und/oder kritischen Situationen während der autonomen Fahrt eingreifen zu können.

Die EP 1 839 479 A1 beschreibt beispielsweise ein Verfahren zur Steuerung mehrerer landwirtschaftlicher Maschinensysteme bei der Bearbeitung eines zu bearbeitenden Territoriums, bei dem auf Basis einer Referenzlinie eine optimierte Route zur Bearbeitung des Territoriums für das jeweilige Maschinensystem ermittelt wird und dann das betreffende Maschinensystem entlang dieser Route gefahren wird.

Der vorliegenden Erfindung liegt die Aufgabe zugrunde, eine verbesserte oder zumindest eine alternative Ausführungsform einer selbstfahrenden landwirtschaftlichen Arbeitsmaschine anzugeben, wobei insbesondere eine Beeinträchtigung der selbstfahrenden landwirtschaftlichen Arbeitsmaschine aufgrund von bestehenden Schlammbereichen und/oder bevorstehenden Schlammbereichen des landwirtschaftlichen Feldes vermieden wird.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, dass die Route entlang des landwirtschaftlichen Feldes basierend auf Wetterdaten und topografischen Kartenfelddaten angepasst wird.

Die erfindungsgemäße selbstfahrende landwirtschaftliche Arbeitsmaschine ist zur Bearbeitung eines landwirtschaftlichen Feldes ausgebildet. Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen wie Traktoren oder dergleichen.

Die selbstfahrende landwirtschaftliche Arbeitsmaschine weist eine Steuervorrichtung auf, die dazu ausgebildet und/oder programmiert ist, die selbstfahrende landwirtschaftliche Arbeitsmaschine während der Bearbeitung des landwirtschaftlichen Feldes entlang einer Route zu führen.

Die Steuervorrichtung kann dazu ausgebildet und/oder programmiert sein, die Route mittels eines Routenplanungssystems und/oder einem Routenplanungsverfahren zu ermitteln. Die Steuervorrichtung kann dazu ausgebildet und/oder programmiert sein, wenigstens eine Lenkvorrichtung der selbstfahrenden landwirtschaftlichen Arbeitsmaschine basierend auf der ermittelten Route während der Bearbeitung des landwirtschaftlichen Feldes derart anzusteuern, insbesondere mittels Ansteuerungsdaten anzusteuern, sodass die selbstfahrende landwirtschaftliche Arbeitsmaschine der ermittelten Route folgt.

Vorzugsweise kann sich der Begriff "Steuervorrichtung" auf eine Elektronikschaltung (z. B. mit Mikroprozessor(en) und Datenspeicher(n)) und/oder eine mechanische Steuerung beziehen, die je nach Ausbildung Steuerungsaufgaben und/oder Regelungsaufgaben übernehmen und/oder ausführen kann. Auch wenn hierin der Begriff "Steuern" verwendet wird, kann damit gleichsam zweckmäßig auch "Regeln" bzw. "Steuern mit Rückkopplung" umfasst sein.

Die Steuervorrichtung kann kommunizierend mit wenigstens einer Lenkvorrichtung der selbstfahrenden landwirtschaftlichen Arbeitsmaschine verbunden sein. Die Lenkvorrichtung kann Komponenten der selbstfahrenden landwirtschaftlichen Arbeitsmaschine, die die Fahrtrichtung der selbstfahrenden landwirtschaftlichen Arbeitsmaschine beeinflussen, basierend auf Ansteuerungsdaten der Steuervorrichtung beispielsweise mechanisch, hydraulisch, pneumatisch und/oder elektronisch derart ansteuern, dass die selbstfahrende landwirtschaftliche Arbeitsmaschine der ermittelten Route folgt.

Unter einer kommunizierenden Verbindung kann zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Die kommunizierende Verbindung kann insbesondere kabellos und/oder drahtlos ausgebildet sein.

Die selbstfahrende landwirtschaftliche Arbeitsmaschine kann je nach Ausgestaltung der Steuervorrichtung vollautomatisch, d. h durch eine Lenkautomation, und/oder halbautomatisch mit Unterstützung durch einen Benutzer entlang der Route gefahren und/oder gelenkt werden. Mit anderen Worten ausgedrückt, kann die Steuervorrichtung derart ausgebildet und/oder programmiert sein, dass die selbstfahrende landwirtschaftliche Arbeitsmaschine die Route autonom abfährt, wobei jedoch stets ein Benutzer in der selbstfahrenden landwirtschaftlichen Arbeitsmaschine während der Bearbeitung des landwirtschaftlichen Feldes anwesend sein muss, um in ungewünschte und/oder kritische Situationen während der autonomen Fahrt eingreifen zu können.

Die Steuervorrichtung kann kommunizierend mit einem satellitengestützten Positionslokalisationssystem oder mehreren satellitengestützten Positionslokalisationssystemen verbunden sein. Hierfür kann die Steuervorrichtung beispielsweise wenigstens einen GPS-Empfänger (GPS = Global Positioning System) umfassen. Ferner kann zur Verbesserung der Genauigkeit ein Korrekturverfahren eingesetzt werden. Dies kann beispielsweise für das GPS-Verfahren das sog. DGPS (Differentielles GPS) sein und/oder das sog. RTK-Verfahren (Real Time Kinematic) sein.

Die Steuervorrichtung ist dazu ausgebildet und/oder programmiert, die Route entlang des landwirtschaftlichen Feldes basierend auf Wetterdaten bezüglich des zu bearbeitenden Feldes und basierend auf topografischen Kartenfelddaten bezüglich des zu bearbeitenden Feldes anzupassen. Die Steuervorrichtung kann mit einer Datenquelle, die die Wetterdaten und/oder die topografischen Kartenfelddaten aufweist, kommunizierend verbunden sein.

Die Wetterdaten können bestehende Wetterdaten und/oder zukünftige Wetterdaten bezüglich des zu bearbeitenden Feldes umfassen. Insbesondere können die Wetterdaten Informationen bezüglich des Regens umfassen. Die topografischen Kartenfelddaten umfassen Höheninformationen, insbesondere in Form von Bodenhöhen, bezüglich des zu bearbeitenden Feldes. Die Steuervorrichtung kann dazu ausgebildet und/oder programmiert sein, basierend auf den Wetterdaten und den topografischen Kartenfelddaten die Route derart anzupassen, dass bei nahendem Regen stark zu Schlamm tendierende Bereiche, die basierend auf topografischen Kartenfelddaten erkennbar sind, entweder noch vorher bearbeiten oder komplett meiden, wenn eine vorherige Bearbeitung voraussichtlich nicht mehr möglich sein wird.

Hierdurch wird insbesondere eine Beeinträchtigung der selbstfahrenden landwirtschaftlichen Arbeitsmaschine aufgrund von bestehenden Schlammbereichen und/oder bevorstehenden Schlammbereichen des landwirtschaftlichen Feldes vermieden.

Die angepasste Route kann auf einem Terminal in der selbstfahrenden landwirtschaftlichen Arbeitsmaschine und/oder über eine Remote-Schnittstelle dargestellt werden. Es kann auch vorgesehen sein, dass die selbstfahrende landwirtschaftliche Arbeitsmaschine von anderen selbstfahrenden landwirtschaftlichen Arbeitsmaschinen Abarbeitungskarten bezüglich des schon abgearbeiteten Bereiches des landwirtschaftlichen Feldes erhält und basierend hierauf die Route zusätzlich anpasst. Die selbstfahrende landwirtschaftliche Arbeitsmaschine kann eine kooperierende, autonome Maschine sein.

Bei einer vorteilhaften Weiterbildung der erfindungsgemäßen Lösung ist vorgesehen, dass die Steuervorrichtung dazu ausgebildet und/oder programmiert ist, bei der Anpassung der Route entlang des landwirtschaftlichen Feldes zusätzlich Eigenschaftsparameter der selbstfahrenden landwirtschaftlichen Arbeitsmaschine einzubeziehen. Die Steuervorrichtung kann mit einer Datenquelle, die die Eigenschaftsparameter der selbstfahrenden landwirtschaftlichen Arbeitsmaschine aufweist, kommunizierend verbunden sein.

Die Eigenschaftsparameter der selbstfahrenden landwirtschaftlichen Arbeitsmaschine können sich beispielsweise auf die Art der Arbeitsmaschine, das Gesamtgewicht der Arbeitsmaschine, die Abmessungen der Arbeitsmaschine und/oder die Fahrwerksausgestaltung der Arbeitsmaschine beziehen.

Da bei der Anpassung der Route entlang des landwirtschaftlichen Feldes neben den Wetterdaten und Kartenfelddaten zusätzliche Eigenschaftsparameter zur Anpassung der Route genutzt werden, kann beispielsweise eine selbstfahrende landwirtschaftliche Arbeitsmaschine mit einem geringen Gesamtgewicht noch Abschnitte des landwirtschaftlichen Feldes befahren, während eine andere selbstfahrende landwirtschaftliche Arbeitsmaschine mit einem im Vergleich zur erstgenannten Arbeitsmaschine höheren Gesamtgewicht diese Abschnitte aus Sicherheitsgründen nicht mehr bearbeiten kann.

Bei einer vorteilhaften Weiterbildung der erfindungsgemäßen Lösung ist vorgesehen, dass die Steuervorrichtung dazu ausgebildet und/oder programmiert ist, bei der Anpassung der Route entlang des landwirtschaftlichen Feldes zusätzlich Bodenstrukturdaten des landwirtschaftlichen Feldes einzubeziehen. Die Steuervorrichtung kann mit einer Datenquelle, die die Bodenstrukturdaten des landwirtschaftlichen Feldes aufweist, kommunizierend verbunden sein.

Die Bodenstrukturdaten des landwirtschaftlichen Feldes können beispielsweise Erfahrungswerte, insbesondere Messwerte sein, die umfassen, welche Bereiche des landwirtschaftlichen Feldes bei welcher Wettersituation, insbesondere bei welcher Regensituation, Schlammbereiche, insbesondere mit welcher Schlammstärke, ausbilden. Die Bodenstrukturdaten können alternativ oder zusätzlich Informationen dahingehend umfassen, ob der Boden oder Bereiche des Bodens des landwirtschaftlichen Feldes lehmig, sandig, leicht, tonig sind und/oder Minutenböden ausbilden.

Da bei der Anpassung der Route entlang des landwirtschaftlichen Feldes neben den Wetterdaten und Kartenfelddaten zusätzlich Bodenstrukturdaten zur Anpassung der Route genutzt werden, kann die Route auf lokalen Erfahrungswerten optimiert werden.

Bei einer vorteilhaften Weiterbildung der erfindungsgemäßen Lösung ist vorgesehen, dass die selbstfahrende landwirtschaftliche Arbeitsmaschine wenigstens eine Sensorvorrichtung zur Erfassung von Umfelddaten bezüglich des Umfeldes der selbstfahrenden landwirtschaftlichen Arbeitsmaschine umfasst, wobei die Steuervorrichtung dazu ausgebildet und/oder programmiert ist, bei der Anpassung der Route entlang des landwirtschaftlichen Feldes zusätzlich Umfelddaten der wenigstens einen Sensorvorrichtung einzubeziehen. Die wenigstens eine Sensorvorrichtung kann kommunizierend mit der Steuervorrichtung verbunden sein. Die Umfelddaten bezüglich des Umfeldes der selbstfahrenden landwirtschaftlichen Arbeitsmaschine können beispielsweise Wetterdaten und/oder topografische Kartenfelddaten sein.

Bei einer vorteilhaften Weiterbildung der erfindungsgemäßen Lösung ist vorgesehen, dass die Steuervorrichtung dazu ausgebildet und/oder programmiert ist, basierend auf den Wetterdaten und/oder den Kartenfelddaten und/oder den Eigenschaftsparametern und/oder den Bodenstrukturdaten und/oder den Umfelddaten bestehende Hindernisse und/oder zukünftige Hindernisse des zu bearbeitenden Feldes zu ermitteln. Mit anderen Worten ausgedrückt, werden Bereiche des zu bearbeitenden Feldes ermittelt, in denen bestehende Hindernisse vorliegen und/oder zukünftige Hindernisse des zu bearbeitenden Feldes während der Bearbeitung des Feldes entstehen werden.

Bei einer vorteilhaften Weiterbildung der erfindungsgemäßen Lösung ist vorgesehen, dass die Steuervorrichtung dazu ausgebildet und/oder programmiert ist, basierend auf den Wetterdaten und/oder den Kartenfelddaten und/oder den Eigenschaftsparametern und/oder den Bodenstrukturdaten und/oder den Umfelddaten bestehende Schlammbereiche und/oder zukünftige Schlammbereiche des zu bearbeitenden Feldes zu ermitteln. Mit anderen Worten ausgedrückt, werden Bereiche des zu bearbeitenden Feldes ermittelt, in denen bestehende Schlammbereiche vorliegen und/oder zukünftige Schlammbereiche des zu bearbeitenden Feldes während der Bearbeitung des Feldes entstehen werden.

Bei einer vorteilhaften Weiterbildung der erfindungsgemäßen Lösung ist vorgesehen, dass die Steuervorrichtung dazu ausgebildet und/oder programmiert ist, die Route basierend auf den bestehenden Hindernissen, insbesondere den bestehenden Schlammbereichen, derart anzupassen, dass die selbstfahrende landwirtschaftliche Arbeitsmaschine die bestehenden Hindernisse, insbesondere die bestehenden Schlammbereiche, umfährt.

Bei einer vorteilhaften Weiterbildung der erfindungsgemäßen Lösung ist vorgesehen, dass die Steuervorrichtung dazu ausgebildet und/oder programmiert ist, die Route basierend auf den zukünftigen Hindernissen, insbesondere den zukünftigen Schlammbereichen, derart anzupassen, dass die selbstfahrende landwirtschaftliche Arbeitsmaschine wenigstens einen Bereich des zu bearbeitenden Feldes, in dem ein zukünftiges Hindernis, insbesondere ein zukünftiger Schlammbereich, während der Bearbeitung des Feldes entstehen wird, vor der Entstehung dieses zukünftigen Hindernisses, insbesondere dieses zukünftigen Schlammbereiches, abfährt.

Hierbei kann die Steuervorrichtung dazu ausgebildet und/oder programmiert sein, basierend auf zukünftigen Wetterdaten bezüglich des zu bearbeitenden Feldes und den topografischen Kartenfelddaten des zu bearbeitenden Feldes zu ermitteln, ob wenigstens in einem Bereich des zu bearbeitenden Feldes ein zukünftiges Hindernis, insbesondere ein zukünftiger Schlammbereich, während der Bearbeitung des Feldes entstehen wird. Unter zukünftigen Wetterdaten können beispielsweise Prognosen der Wetterdaten für den Zeitraum der geplanten Bearbeitung des landwirtschaftlichen Feldes verstanden werden.

Die Steuervorrichtung kann dazu ausgebildet und/oder programmiert sein, basierend auf zukünftigen Wetterdaten bezüglich des zu bearbeitenden Feldes und den topografischen Kartenfelddaten des zu bearbeitenden Feldes zu ermitteln, zu welchem zukünftigen Zeitpunkt ein zukünftiges Hindernis, insbesondere ein zukünftiger Schlammbereich, auf dem zu bearbeitenden Feld ausgebildet wird.

Die Steuervorrichtung kann dazu ausgebildet und/oder programmiert sein, basierend auf den topografischen Kartenfelddaten, insbesondere Höhendaten der topografischen Kartenfelddaten, Senken und/oder Erhebungen des zu bearbeitenden Feldes zu ermitteln und mit den zukünftigen Wetterdaten, insbesondere zukünftigen Wahrscheinlichkeiten bezüglich eines Regens und/oder einer Regenmenge, derart zu verknüpfen, dass ein zukünftiges Hindernis, insbesondere ein zukünftiger Schlammbereich, auf dem zu bearbeitenden Feld ermittelt, insbesondere zeitlich vorhersagend ermittelt, wird. Hierbei können die zukünftigen Wetterdaten eine Prognose des Niederschlags pro Flächeneinheit, insbesondere pro Quadratmeter, des zu bearbeitenden Feldes umfassen. Die Steuervorrichtung kann dazu ausgebildet und/oder programmiert sein, basierend auf der Prognose des Niederschlags pro Flächeneinheit und den geometrischen Abmessungen der Senken und/oder Erhebungen des zu bearbeitenden Feldes zu ermitteln, ob ein zukünftiges Hindernis, insbesondere ein zukünftiger Schlammbereich, auf dem zu bearbeitenden Feld entstehen wird.

Hierbei kann die Steuervorrichtung dazu ausgebildet und/oder programmiert sein, mittels des Positionslokalisationssystems die Position der selbstfahrenden landwirtschaftlichen Arbeitsmaschine bezüglich der Position wenigstens eines Bereiches des zu bearbeitenden Feldes, in dem ein zukünftiges Hindernis, insbesondere ein zukünftiger Schlammbereich, während der Bearbeitung des Feldes entstehen wird, zu ermitteln. Ferner kann die Steuervorrichtung dazu ausgebildet und/oder programmiert sein, basierend auf Eigenschaften der selbstfahrenden landwirtschaftlichen Arbeitsmaschine, insbesondere ihrer maximalen Fahrgeschwindigkeit, die Route derart anzupassen, dass ein Maximum der Bereiche des zu bearbeitenden Feldes, in dem zukünftige Hindernisse, insbesondere zukünftige Schlammbereiche, während der Bearbeitung des Feldes entstehen werden, vor ihrer Entstehung abgefahren und/oder bearbeitet wird. Sollte die Steuervorrichtung jedoch ermitteln, dass Bereiche des zu bearbeitenden Feldes, in dem zukünftige Hindernisse, insbesondere ein zukünftige Schlammbereiche, während der Bearbeitung des Feldes entstehen werden, nicht vor ihrer Entstehung abgefahren und/oder bearbeitet werden können, wird die Route basierend auf den zukünftigen Hindernissen, insbesondere zukünftigen Schlammbereichen, derart angepasst, dass die selbstfahrende landwirtschaftliche Arbeitsmaschine die Bereiche des zu bearbeitenden Feldes, in dem zukünftige Hindernisse, insbesondere ein zukünftige Schlammbereiche, während der Bearbeitung des Feldes entstehen werden, umfährt.

Bei einer vorteilhaften Weiterbildung der erfindungsgemäßen Lösung ist vorgesehen, dass die Steuervorrichtung dazu ausgebildet und/oder programmiert ist, die Route basierend auf den Hindernissen, insbesondere den Schlammbereichen, derart anzupassen, dass der Überlappungsbereich zwischen benachbarten Spurabschnitten der Route minimiert wird. Bei einer vorteilhaften Weiterbildung der erfindungsgemäßen Lösung ist vorgesehen, dass die Sensorvorrichtung eine an der selbstfahrenden landwirtschaftlichen Arbeitsmaschine angeordnete Kameravorrichtung, insbesondere Stereo-Kameravorrichtung, und/oder Lidar-Vorrichtung und/oder Radar-Vorrichtung ist, und/oder dass die Sensorvorrichtung eine fliegende Drohenvorrichtung ist, die kommunizierend mit der Steuervorrichtung der selbstfahrenden landwirtschaftlichen Arbeitsmaschine verbunden ist.

Bei einer vorteilhaften Weiterbildung der erfindungsgemäßen Lösung ist vorgesehen, dass die Steuervorrichtung mit wenigstens einer weiteren selbstfahrenden landwirtschaftlichen Arbeitsmaschine, insbesondere mit einer weiteren Steuervorrichtung der weiteren selbstfahrenden landwirtschaftlichen Arbeitsmaschine, kommunizierend verbunden ist. Hierdurch können beispielsweise Daten bezüglich Wetterdaten und/oder den Kartenfelddaten und/oder den Eigenschaftsparametern und/oder den Bodenstrukturdaten und/oder den Umfelddaten und/oder bestehender Schlammbereiche und/oder zukünftiger Schlammbereiche des zu bearbeitenden Feldes übermittelt und/oder ausgetauscht werden. Ferner kann vorgesehen sein, dass die selbstfahrenden landwirtschaftlichen Arbeitsmaschinen sich untereinander anhand der die satellitengestützten Positionslokalisationen koordinieren.

Bei einer vorteilhaften Weiterbildung der erfindungsgemäßen Lösung ist vorgesehen, dass die Steuervorrichtung dazu ausgebildet und/oder programmiert ist, die Route basierend auf einem manuellen Eingriff eines Fahrers der selbstfahrenden landwirtschaftlichen Arbeitsmaschine entsprechend anzupassen. Der Fahrer hat z.B. bei einer geplanten Route zwischendurch manuell um einen Bereich herum gelenkt. Die Steuervorrichtung kann dem Fahrer daraufhin anbieten, die benachbarten Fahrspuren neu zu planen, um einen Überlappungsbereich der Fahrspuren zu minimieren.

Bei einer vorteilhaften Weiterbildung der erfindungsgemäßen Lösung ist vorgesehen, dass die selbstfahrende landwirtschaftliche Arbeitsmaschine zur Erfassung von Antriebsschlupfregelungsdaten ausgebildet ist. Die erfassten Antriebsschlupfregelungsdaten bilden Eigenschaftsparameter der selbstfahrenden landwirtschaftlichen Arbeitsmaschine aus. Die selbstfahrende landwirtschaftliche Arbeitsmaschine kann zur Erfassung von Antriebsschlupfregelungsdaten wenigstens einen entsprechenden Sensor aufweisen.

Bei einer vorteilhaften Weiterbildung der erfindungsgemäßen Lösung ist vorgesehen, dass die Steuervorrichtung dazu ausgebildet und/oder programmiert ist, die während des Betriebs der selbstfahrenden landwirtschaftlichen Arbeitsmaschine erfassten Wetterdaten und/oder Kartenfelddaten und/oder Eigenschaftsparametern und/oder Bodenstrukturdaten und/oder Umfelddaten und/oder Antriebsschlupfregelungsdaten zu speichern und/oder an eine weitere selbstfahrende landwirtschaftliche Arbeitsmaschine zu übertragen.

Bei einer vorteilhaften Weiterbildung der erfindungsgemäßen Lösung ist vorgesehen, dass die Steuervorrichtung dazu ausgebildet und/oder programmiert ist, die während des Betriebs ausgeführten Anpassungen der Route zu speichern und/oder an eine weitere selbstfahrende landwirtschaftliche Arbeitsmaschine zu übertragen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine selbstfahrende landwirtschaftliche Arbeitsmaschine während der Bearbeitung eines landwirtschaftlichen Feldes, und
- Fig. 2: eine weitere selbstfahrende landwirtschaftliche Arbeitsmaschine während der Bearbeitung eines weiteren landwirtschaftlichen Feldes, und
- Fig. 3: zwei weitere selbstfahrende landwirtschaftliche Arbeitsmaschinen während der Bearbeitung eines weiteren landwirtschaftlichen Feldes, und
- Fig. 4: eine fliegende Drohenvorrichtung zur Erfassung von Höheninformationen bezüglich eines zu bearbeitenden Feldes, und
- Fig. 5: schematisch die miteinander kommunizierend verbundenen Einheiten.

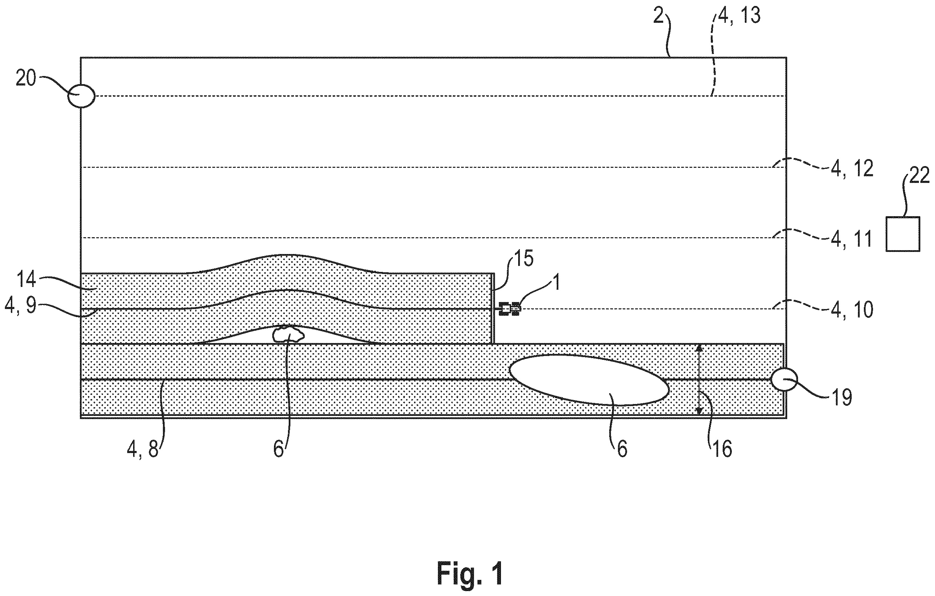

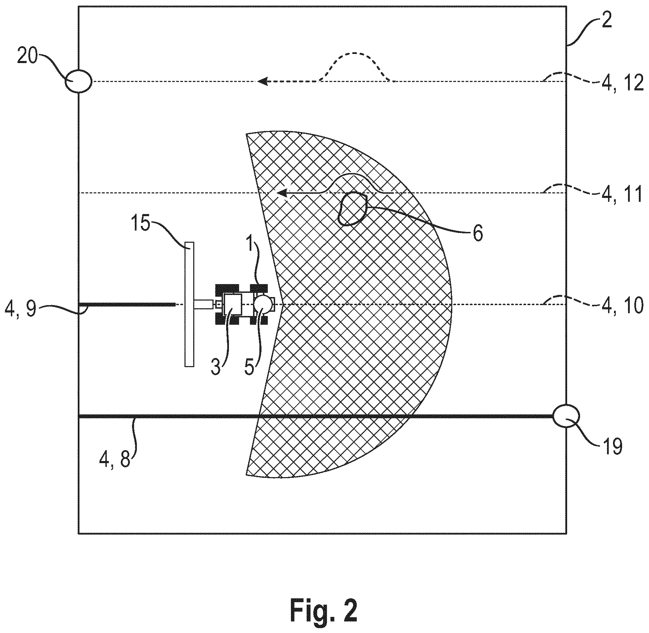

Fig. 1 zeigt eine selbstfahrende landwirtschaftliche Arbeitsmaschine 1, die ein landwirtschaftliches Feld 2 mit einem Anbaugerät 15, welches eine Arbeitsbreite 16 aufweist, bearbeitet. Die selbstfahrende landwirtschaftliche Arbeitsmaschine 1 weist eine Steuervorrichtung 3 auf, die beispielhaft in der Fig. 2 dargestellt ist. Diese Steuervorrichtung 3 ist dazu ausgebildet und/oder programmiert, die selbstfahrende landwirtschaftliche Arbeitsmaschine 1 während der Bearbeitung des landwirtschaftlichen Feldes 2 entlang einer Route 4 zu führen. Die Vorgewende-Bereiche sind in den Figuren nicht dargestellt, jedoch sind beispielsweise zwei benachbarte Fahrspuren 8 und 9 über eine solche nicht dargestellte Vorgewende-Spur miteinander verbunden.

Die Route 4 hat einen Startpunkt 19 und einen Endpunkt 20, die über mehrere Fahrspuren 8, 9, 10, 11, 12, 13 und nicht dargestellte Vorgewende-Bereiche verbunden sind. Die Fahrspuren 8 und 9 hat die selbstfahrende landwirtschaftliche Arbeitsmaschine 1 schon befahren, wobei die Fahrspuren 10, 11, 12, 13 zukünftige Fahrspuren sind. Die schon von der selbstfahrenden landwirtschaftlichen Arbeitsmaschine 1 bearbeiteten Teile 14 des landwirtschaftlichen Feldes 2 sind in der Fig. 1 verdunkelt dargestellt bzw. angedeutet.

Die selbstfahrende landwirtschaftliche Arbeitsmaschine 1 war zum Beginn der Bearbeitung des landwirtschaftlichen Feldes 2 am Startpunkt 19 positioniert und die Steuervorrichtung 3 hat die Route 4 entlang des landwirtschaftlichen Feldes 2 bis zum Endpunkt 20 basierend auf Wetterdaten bezüglich des zu bearbeitenden Feldes 2 und basierend auf topografischen Kartenfelddaten bezüglich des zu bearbeitenden Feldes 2 angepasst. In der Fig. 1 sind zwei Hindernisse in Form von Schlammbereichen 6 dargestellt.

Als die selbstfahrende landwirtschaftliche Arbeitsmaschine 1 am Startpunkt 19 war, existierte der Schlammbereich 6 auf der Fahrspur 8 der Route 4 noch nicht, während der Schlammbereich 6 in der Nähe der Fahrspur 9 der Route 4 schon ausgebildet war. Die Steuervorrichtung 3 hat die Route 4 basierend auf dem zukünftigen Schlammbereich 6 der der Fahrspur 8 derart angepasst, dass die selbstfahrende landwirtschaftliche Arbeitsmaschine 1 den Bereich, in dem der zukünftige Schlammbereiche 6 entstehend wird, vor der Entstehung abfährt. Anderseits hat die Steuervorrichtung 3 die Route 4 basierend auf dem ausgebildeten Schlammbereich 6 in der Nähe der Fahrspur 9 derart angepasst, dass die selbstfahrende landwirtschaftliche Arbeitsmaschine den bestehenden Schlammbereich 6 umfährt.

Die Steuervorrichtung 3 kann kommunizierend mit einem oder mehreren satellitengestützten Positionslokalisationssystemen 22 verbunden sein. Hierdurch konnte die Steuervorrichtung 3 beispielweise am Startpunkt 19 den Abstand zum zukünftig ausgebildeten Schlammbereich 6 auf der Fahrspur 8 der Route 4 ermitteln und aus der Fahrgeschwindigkeit der selbstfahrende landwirtschaftliche Arbeitsmaschine 1 ermitteln, dass die selbstfahrende landwirtschaftliche Arbeitsmaschine 1 die Position des zukünftig ausgebildeten Schlammbereiches 6 vor derer Ausbildung erreicht.

In der Fig. 2 ist eine selbstfahrende landwirtschaftliche Arbeitsmaschine 1 mit einer Steuervorrichtung 3 dargestellt, wobei die selbstfahrende landwirtschaftliche Arbeitsmaschine 1 wenigstens eine Sensorvorrichtung 5 zur Erfassung von Umfelddaten bezüglich des Umfeldes der selbstfahrenden landwirtschaftlichen Arbeitsmaschine 1 umfasst, wobei die Steuervorrichtung 3 dazu ausgebildet und/oder programmiert ist, bei der Anpassung der Route 4 entlang des landwirtschaftlichen Feldes 2 zusätzlich Umfelddaten der wenigstens einen Sensorvorrichtung 5 einzubeziehen. Die Steuervorrichtung 3 erkennt einen Schlammbereich 6 auf der zukünftigen Fahrspur 11 der Route 4 und passt die Route 4 derart an, dass die selbstfahrende landwirtschaftliche Arbeitsmaschine den bestehenden Schlammbereich 6 umfährt.

Ferner hat die Steuervorrichtung 3 die Route 4 basierend auf diesem erfassten Schlammbereich 6 derart angepasst, dass der Überlappungsbereich zwischen benachbarten Spurabschnitten 11 und 12 der Route 4 minimiert wird.

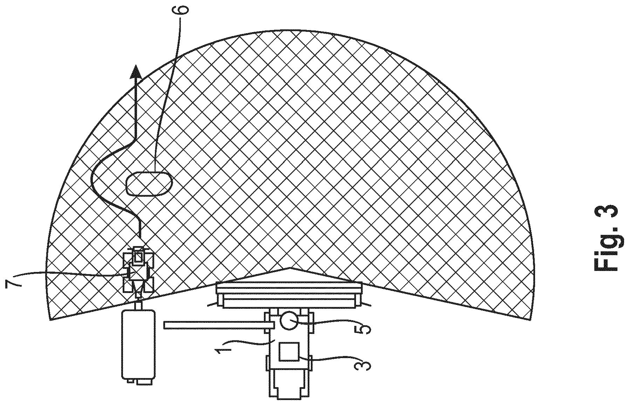

In der Fig. 3 sind zwei weitere selbstfahrende landwirtschaftliche Arbeitsmaschinen 1 und 7 während der Bearbeitung eines weiteren landwirtschaftlichen Feldes dargestellt, der einen bestehenden Schlammbereich 6 aufweist. Während die selbstfahrende landwirtschaftliche Arbeitsmaschine 1 eine Steuervorrichtung 3 mit einer Sensorvorrichtung 5 aufweist, weist die andere landwirtschaftliche Arbeitsmaschine 7 keine solche Sensorvorrichtung 5 auf. Die Steuervorrichtung 3 der selbstfahrenden landwirtschaftlichen Arbeitsmaschine 1 ist jedoch kommunizierend mit der weiteren selbstfahrenden landwirtschaftlichen Arbeitsmaschine 7 verbunden. Die selbstfahrende landwirtschaftliche Arbeitsmaschine 1 bewirkt, dass die andere selbstfahrende landwirtschaftliche Arbeitsmaschine 7 beispielweise gewarnt wird und daher die bestehenden Schlammbereich 6 umfährt. Die selbstfahrende landwirtschaftliche Arbeitsmaschine 1, die beispielsweise ein Mähdrescher oder Feldhäcksler sein kann, erfasst das Hindernis 6 vor der selbstfahrenden landwirtschaftlichen Arbeitsmaschine 7. Daraufhin kann eine Ausweichroute berechnet werden, beispielsweise entweder durch die selbstfahrende landwirtschaftliche Arbeitsmaschine 7 und/oder durch die selbstfahrende landwirtschaftliche Arbeitsmaschine 1.

Es kann vorgesehen sein, dass ein Fahrer der selbstfahrenden landwirtschaftlichen Arbeitsmaschine 7 und/oder ein Fahrer der selbstfahrenden landwirtschaftlichen Arbeitsmaschine 1 eine Warnung erhält. Es kann vorgesehen sein, dass die Geschwindigkeit, insbesondere die Fahrgeschwindigkeit, der selbstfahrenden landwirtschaftlichen Arbeitsmaschine 7 und/oder der selbstfahrenden landwirtschaftlichen Arbeitsmaschine 1 entsprechend angepasst wird, um ein durchfahren des bestehenden Schlammbereiches 6 durch die landwirtschaftliche Arbeitsmaschine 7 zu vermeiden. Hierbei kann ein stehen bleiben und/oder ein seitliches Ausweichen der selbstfahrenden landwirtschaftlichen Arbeitsmaschine 7 und/oder der selbstfahrenden landwirtschaftlichen Arbeitsmaschine 1 derart geregelt werden, dass die selbstfahrende landwirtschaftliche Arbeitsmaschine 7 nicht in den bestehenden Schlammbereich 6 fährt. Bei einer virtuellen Deichsel überwacht beispielsweise nur ein vorausschauendes Fahrzeug das Umfeld und kann bei erkannten Schlammbereich 6 für das folgende (autonome) Fahrzeug ebenfalls eine Ausweichroute kommandieren.

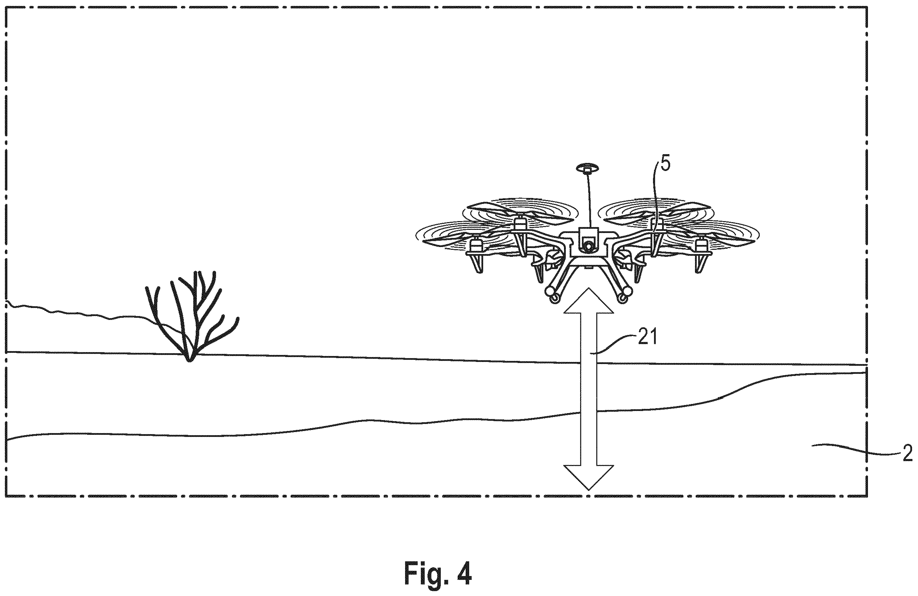

In der Fig. 4 ist eine fliegende Drohenvorrichtung dargestellt, die kommunizierend mit der Steuervorrichtung 3 der nicht dargestellten selbstfahrenden landwirtschaftlichen Arbeitsmaschine 1 verbunden ist. Die Drohenvorrichtung kann beispielsweise zur Erfassung von Höheninformationen, insbesondere Bodenhöhen 21, bezüglich des zu bearbeitenden Feldes ausgebildet sein.

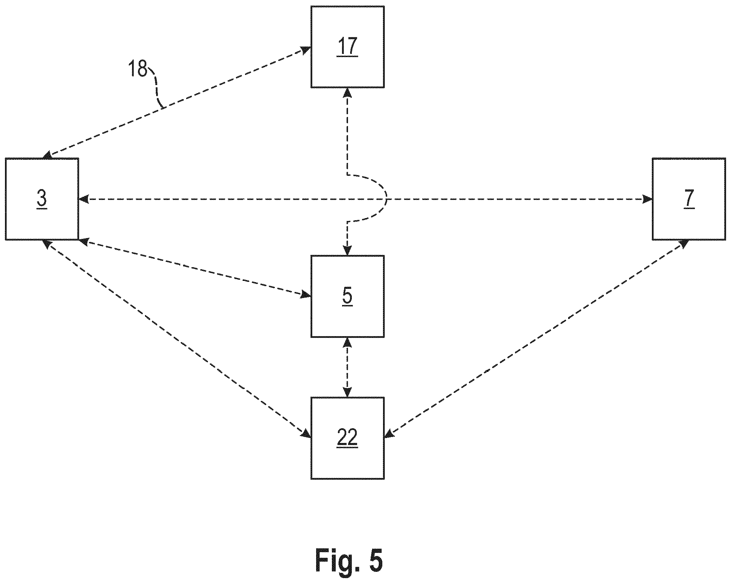

In der Fig. 5 sind schematisch die miteinander kommunizierend verbundenen Einheiten dargestellt. Die Steuervorrichtung 3 einer ersten selbstfahrenden landwirtschaftlichen Arbeitsmaschine 1 kann über mehrere kommunizierende Verbindungen 18 mit einer Datenquelle 17, der Sensorvorrichtung 5 und dem Positionslokalisationssystem 22 kommunizierend verbunden sein. Außerdem kann die Steuervorrichtung 3 der ersten selbstfahrenden landwirtschaftlichen Arbeitsmaschine 1 mit einer weiteren selbstfahrenden landwirtschaftlichen Arbeitsmaschine 7 kommunizierend verbunden sein. Die Datenquelle 17 kann die Wetterdaten und/oder die topografischen Kartenfelddaten aufweisen. Die weitere selbstfahrende landwirtschaftliche Arbeitsmaschine 7 kann kommunizierend mit dem Positionslokalisationssystem 22 verbunden sein.

### Bezugszeichenliste

- 1: Selbstfahrende landwirtschaftliche Arbeitsmaschine
- 2: landwirtschaftliches Feld
- 3: Steuervorrichtung
- 4: Route
- 5: Sensorvorrichtung
- 6: Hindernis, insbesondere Schlammbereich
- 7: weitere selbstfahrende landwirtschaftliche Arbeitsmaschine
- 8: Fahrspur
- 9: Fahrspur
- 10: zukünftige Fahrspur
- 11: zukünftige Fahrspur
- 12: zukünftige Fahrspur
- 13: zukünftige Fahrspur
- 14: Bearbeitete Teile
- 15: Anbaugerät
- 16: Arbeitsbreite
- 17: Datenquelle
- 18: kommunizierende Verbindung
- 19: Startpunkt
- 20: Endpunkt
- 21: Bodenhöhe
- 22: Positionslokalisationssystem

## Patentansprüche

1. Selbstfahrende landwirtschaftliche Arbeitsmaschine (1) zur Bearbeitung eines landwirtschaftlichen Feldes (2),
mit einer Steuervorrichtung (3), die dazu ausgebildet und/oder programmiert ist, die selbstfahrende landwirtschaftliche Arbeitsmaschine (1) während der Bearbeitung des landwirtschaftlichen Feldes (2) entlang einer Route (4) zu führen,
**dadurch gekennzeichnet,**
**dass** die Steuervorrichtung (3) dazu ausgebildet und/oder programmiert ist, die Route (4) entlang des landwirtschaftlichen Feldes (2) basierend auf Wetterdaten bezüglich des zu bearbeitenden Feldes (2) und basierend auf topografischen Kartenfelddaten bezüglich des zu bearbeitenden Feldes (2) anzupassen.

2. Selbstfahrende landwirtschaftliche Arbeitsmaschine (1) nach Anspruch 1,
**dadurch gekennzeichnet,**
**dass** die Steuervorrichtung (3) dazu ausgebildet und/oder programmiert ist, bei der Anpassung der Route (4) entlang des landwirtschaftlichen Feldes (2) zusätzlich Eigenschaftsparameter der selbstfahrenden landwirtschaftlichen Arbeitsmaschine (1) einzubeziehen.

3. Selbstfahrende landwirtschaftliche Arbeitsmaschine (1) nach Anspruch 1 oder 2,
**dadurch gekennzeichnet,**
**dass** die Steuervorrichtung (3) dazu ausgebildet und/oder programmiert ist, bei der Anpassung der Route (4) entlang des landwirtschaftlichen Feldes (2) zusätzlich Bodenstrukturdaten des landwirtschaftlichen Feldes (2) einzubeziehen.

4. Selbstfahrende landwirtschaftliche Arbeitsmaschine (1) nach einem der vorhergehenden Ansprüche,
**dadurch gekennzeichnet,**
- **dass** die selbstfahrende landwirtschaftliche Arbeitsmaschine (1) wenigstens eine Sensorvorrichtung (5) zur Erfassung von Umfelddaten bezüglich des Umfeldes der selbstfahrenden landwirtschaftlichen Arbeitsmaschine (1) umfasst,
- wobei die Steuervorrichtung (3) dazu ausgebildet und/oder programmiert ist, bei der Anpassung der Route (4) entlang des landwirtschaftlichen Feldes (2) zusätzlich Umfelddaten der wenigstens einen Sensorvorrichtung (5) einzubeziehen.

5. Selbstfahrende landwirtschaftliche Arbeitsmaschine (1) nach einem der vorhergehenden Ansprüche,
**dadurch gekennzeichnet,**
**dass** die Steuervorrichtung (3) dazu ausgebildet und/oder programmiert ist, basierend auf den Wetterdaten und/oder den Kartenfelddaten und/oder den Eigenschaftsparametern und/oder den Bodenstrukturdaten und/oder den Umfelddaten Bereiche des zu bearbeitenden Feldes (2) zu ermitteln, in denen bestehende Hindernisse (6) vorliegen und/oder zukünftige Hindernisse (6) während der Bearbeitung des Feldes (2) entstehen.

6. Selbstfahrende landwirtschaftliche Arbeitsmaschine (1) nach einem der vorhergehenden Ansprüche,
**dadurch gekennzeichnet,**
**dass** die Steuervorrichtung (3) dazu ausgebildet und/oder programmiert ist, basierend auf den Wetterdaten und/oder den Kartenfelddaten und/oder den Eigenschaftsparametern und/oder den Bodenstrukturdaten und/oder den Umfelddaten Bereiche des zu bearbeitenden Feldes (2) zu ermitteln, in denen bestehende Schlammbereiche (5) vorliegen und/oder zukünftige Schlammbereiche (5) während der Bearbeitung des Feldes (2) entstehen.

7. Selbstfahrende landwirtschaftliche Arbeitsmaschine (1) nach Anspruch 5 oder 6,
**dadurch gekennzeichnet,**
**dass** die Steuervorrichtung (3) dazu ausgebildet und/oder programmiert ist, die Route (4) basierend auf den bestehenden Hindernissen (6), insbesondere den bestehenden Schlammbereichen (6), derart anzupassen, dass die selbstfahrende landwirtschaftliche Arbeitsmaschine (1) die bestehenden Hindernisse (6), insbesondere die bestehenden Schlammbereiche (6), umfährt.

8. Selbstfahrende landwirtschaftliche Arbeitsmaschine (1) nach einem der Ansprüche 5 bis 7,
**dadurch gekennzeichnet,**
**dass** die Steuervorrichtung (3) dazu ausgebildet und/oder programmiert ist, die Route (4) basierend auf den zukünftigen Hindernissen (6), insbesondere den zukünftigen Schlammbereichen (6), derart anzupassen, dass die selbstfahrende landwirtschaftliche Arbeitsmaschine (1) wenigstens einen Bereich des zu bearbeitenden Feldes (2), in dem ein zukünftiges Hindernis (6), insbesondere ein zukünftiger Schlammbereich (6), während der Bearbeitung des Feldes (2) entstehen wird, vor der Entstehung dieses zukünftigen Hindernisses (6), insbesondere dieses zukünftigen Schlammbereiches (6), abfährt.

9. Selbstfahrende landwirtschaftliche Arbeitsmaschine (1) nach Anspruch 8,
**dadurch gekennzeichnet,**
**dass** die Steuervorrichtung (3) dazu ausgebildet und/oder programmiert ist, die Route (4) basierend auf den Hindernissen (6), insbesondere den Schlammbereichen (6), derart anzupassen, dass der Überlappungsbereich zwischen benachbarten Spurabschnitten (11, 12) der Route (4) minimiert wird.

10. Selbstfahrende landwirtschaftliche Arbeitsmaschine (1) nach einem der Ansprüche 4 bis 9,
**dadurch gekennzeichnet,**
- **dass** die Sensorvorrichtung (5) eine an der selbstfahrenden landwirtschaftlichen Arbeitsmaschine (1) angeordnete Kameravorrichtung und/oder Lidar-Vorrichtung und/oder Radar-Vorrichtung ist,
und/oder
- **dass** die Sensorvorrichtung (5) eine fliegende Drohenvorrichtung ist, die kommunizierend mit der Steuervorrichtung (3) der selbstfahrenden landwirtschaftlichen Arbeitsmaschine (1) verbunden ist.

11. Selbstfahrende landwirtschaftliche Arbeitsmaschine (1) nach einem der vorhergehenden Ansprüche,
**dadurch gekennzeichnet,**
**dass** die Steuervorrichtung (3) mit wenigstens einer weiteren selbstfahrenden landwirtschaftlichen Arbeitsmaschine (7) kommunizierend verbunden ist.

12. Selbstfahrende landwirtschaftliche Arbeitsmaschine (1) nach einem der vorhergehenden Ansprüche,
**dadurch gekennzeichnet,**
**dass** die Steuervorrichtung (3) dazu ausgebildet und/oder programmiert ist, die Route (4) basierend auf einem manuellen Eingriff eines Fahrers der selbstfahrenden landwirtschaftlichen Arbeitsmaschine (1) entsprechend anzupassen.

13. Selbstfahrende landwirtschaftliche Arbeitsmaschine (1) nach einem der vorhergehenden Ansprüche,
**dadurch gekennzeichnet,**
**dass** die selbstfahrende landwirtschaftliche Arbeitsmaschine (1) zur Erfassung von Antriebsschlupfregelungsdaten ausgebildet ist.

14. Selbstfahrende landwirtschaftliche Arbeitsmaschine (1) nach einem der vorhergehenden Ansprüche,
**dadurch gekennzeichnet,**
**dass** die Steuervorrichtung (3) dazu ausgebildet und/oder programmiert ist, die während des Betriebs der selbstfahrenden landwirtschaftlichen Arbeitsmaschine (1) erfassten Wetterdaten und/oder Kartenfelddaten und/oder Eigenschaftsparameter und/oder Bodenstrukturdaten und/oder Umfelddaten und/oder Antriebsschlupfregelungsdaten zu speichern und/oder an eine weitere selbstfahrende landwirtschaftliche Arbeitsmaschine (7) zu übertragen.

15. Selbstfahrende landwirtschaftliche Arbeitsmaschine (1) nach einem der vorhergehenden Ansprüche,
**dadurch gekennzeichnet,**
**dass** die Steuervorrichtung (3) dazu ausgebildet und/oder programmiert ist, die während des Betriebs ausgeführten Anpassungen der Route (4) zu speichern und/oder an eine weitere selbstfahrende landwirtschaftliche Arbeitsmaschine (1) zu übertragen.
